# EUROPEAN PATENT SPECIFICATION

(11) **EP 1 734 189 B1**
(45) Date of publication and mention of the grant of the patent: **20.09.2017**
(21) Application number: 06012349.4
(22) Date of filing: 15.06.2006
(51) Int. Cl.: E01C 13/08, B29C 55/00, D01D 5/098

(54) **METHOD FOR FORMING MONOFILAMENTS, AS WELL AS AN ARTIFICIAL LAWN BUILT UP THEREFROM**
VERFAHREN ZUR HERSTELLUNG VON MONOFILEN UND DARAUS HERGESTELLTER KUNSTRASEN
PROCEDE DE FABRICATION DE MONOFILAMENTS ET GAZON ARTIFICIEL PRÉPARÉ À PARTIS DE CELLE-CI

(30) Priority: 17.06.2005 NL 1029276
(43) Date of publication of application: 20.12.2006
(73) Proprietor: Tapijtfabriek H. Desseaux N.V., NL-5349 AC Oss (NL)
(72) Inventor: Schoukens, Gustaaf Hendrik, 3000 Leuven (BE); Van Reijen, Peter, 5403 NK Uden (NL)
(74) Representative: Algemeen Octrooi- en Merkenbureau B.V.

(56) References cited:
- EP-A- 0 648 868
- DE-A1- 2 117 659
- DE-A1- 2 925 006
- US-A- 4 181 762
- US-A- 5 814 176
- US-A1- 2004 032 049

## Description

The present invention relates to a method for forming monofilaments, wherein a granular plastic material is fed to an extruder, whereupon the extruder screw pressurises the grains and presses them through the extruder head, after which the material thus obtained is subjected to a post-stretching operation. The present invention furthermore relates to monofilaments obtained by using such a method, as well as to an artificial lawn built up of the aforesaid monofilaments.

US patent application US 2004/0032049 discloses a method comprising an extruder, wherein the extruded continuous yarns are fed through a tube and subsequently through a perforated tube, being the first cooling zone, after which a so-called mist chamber, being the second cooling zone, is used. Then the yarns are carried over rollers and blow-dried. The so-called pre-stretching operation is carried out by three rollers and a steam pipe at a ratio of 4.2, whereupon other rollers stretch the yarns further to a total proportion of 6.3.

US patent No. 5,814,176 relates to a method for forming two monofilaments that are used in a lawn-mowing machine, which field of the art is not related to that of the present invention.

EP 0 648 868 in the name of the present applicant relates to method for producing a yarn for a field of artificial grass by extruding a polymer material, especially a block copolymer built up of polypropylene and polyethylene, into a monofilament, stretching the monofilament at an elevated temperature, relaxing it to obtain a band and twisting several bands together into a yarn, wherein the stretching takes place at a stretching ratio between 1 : 2 and 1 : 10.

DE 21 176 59 relates to a method for the manufacture of yarns and fibers by melt spinning of filaments made from synthetic linear polymers with the aid of a heating device between the spinneret and the deduction rolls, with pulling speeds greater than 2000 m / min.

DE 2 925 006 relates to a method of producing from synthetic polymers, such as polyesters, polyamides or polyolefins, crystalline filaments which have been stretched to orientate the molecules wherein the filaments are melt-spin from spinnerets and after they have been cooled to below the setting temperature are drawn over heated surfaces.

US 3,984,514 relates to a process for producing extremely fine polyamide/polystyrene fibres comprising the steps of forming a molten blend consisting essentially of from about 35 weight percent up to about 45 weight percent of a polycaprolactam and, correspondingly, from about 65 weight percent down to about 55 weight percent of a polystyrene.

US 3,485,906 relates to the finding that elastic monofilaments of stereo regular polypropylene can be prepared if certain critical process steps are followed, namely extruding stereo regular polypropylene containing from about 0.02% to about 0.08% by weight of an azido bridging agent into a monofilament at a specific temperature, subjecting the molten monofilament to a melt draw down of from about 3: 1 to about 9.5: 1, quenching and heat treating.

US 4,285,898 relates to process for manufacturing a monofilament yarn selected from the group of synthetic polymers consisting of polyamides, polyesters and polyolefins, comprising the steps of melt spinning a polymer substantially vertically downward into a cooling gaseous atmosphere to form a monofilament, inducing a natural yarn deflection into the downward path of the monofilament and thereafter drawing the monofilament to a winding device laterally displaced from the spinning point at a speed of at least 2,750 meters per minute.

US 5,945,055 relates to a method for the production of a filament for a fastener, comprising the steps of: mixing a polyester with 1 to 10 parts by weight, based on 100 parts by weight of said polyester, of polypropylene; melting the resultant mixture; extruding the resultant melt to obtain a filament; and drawing the resultant undrawn filament at a temperature in the range of from 70 to 98 °C

EP 1 275 758 relates to a method for producing a polytrimethylene terephthalate monofilament yarn, wherein after a raw material polytrimethylene terephthalate monofilament yarn having a fibre size of 50 dtex or more is spun and drawn, the raw material polytrimethylene terephthalate monofilament yarn is subjected to a relaxation heat treatment under the condition of a relaxation ratio in a range from -10 to +15% and a heat treatment temperature in a range from 100 to 180 °C.

DE 39 16 407 relates to a process for the manufacture of polymer extrudates, wherein a thermoplastic material in powder or granulate form, is extruded and spun into a film, fibres or strands, wherein the polymer is stretched immediately after spinning to orient the rod-shaped molecules of the polymer chains of the polymer in one or two directions. The products thus obtained, i.e. in the form of fibres, strands, or films, have high tensile strength are used for the preparation of packaging films, reinforcing materials for composites or the production of injection molded parts with high strength requirements.

US 4,181,762 relates to the production of monofilament fibres from low modulus polymeric materials and to yarns and fabrics made therefrom.

The production of monofilaments for use in artificial grass has traditionally taken place by carrying out a melting process in an extruder; the material is introduced into the feed hopper in granular form, after which a screw pressurizes the material - which heats up and melts in the meantime - and presses it through an extruder head.

The current production of monofilaments for use in artificial grass is inter alia based on post-stretching in solid condition at a controlled (elevated) temperature. This cold stretching generally leads to enhanced classical mechanical properties - stiffness and strength - as a result of an increased orientation of the individual polymer chains in the stretching direction. Cold-stretching sets up mechanical tensions in the material, however, which may express themselves at a later stage - in actual use - in the form of a reduced resilience (flattening of the grass after being played on repeatedly) and a reduced thermal resistance (flattening of the grass after being exposed to an elevated temperature). After all, frequent playing on the grass as well as elevated temperatures lead to the mechanical tensions being released from the material, resulting in a reduced stiffness and strength. In addition to the aforesaid deterioration of the mechanical properties with the passage of time, fibrillation - the splitting of the filaments in the longitudinal direction - is another problem that may occur when cold stretching is carried out: after all, only small intermolecular forces are possible between the strongly oriented polymer chains, and also the degree of entwinement - which provides mechanical cohesion in the transverse direction - is limited due to the high level of orientation. The resilience and the thermal resistance will improve when less mechanical tension is set up in the starting material (the monofilaments) during production.

The present invention relates to a method for forming monofilaments, wherein a granular plastic material is fed to an extruder, whereupon the extruder screw pressurises the grains and presses them through the extruder head, after which the material thus obtained is subjected to a post-stretching operation, characterised in that said granular plastic material is HDPE, wherein said post-stretching operation is carried out during the melting phase of the plastic material for crystallising said HDPE after orientation, wherein the degree of post-stretching, i.e. the ratio between the cross-sectional area of the plastic mass exiting the extruder head prior to and after the stretching operation, is at least 2 and maximally 20, wherein the degree of shrinkage of said HDPE is less than 1.0 %, measured at 100 □C and the bending modulus (MPa) is at least 700, wherein the pushover energy is at least 50 micro Joules.

The temperature after post-stretching ranges between the extrusion temperature and the crystallization temperature of the plastic. For HDPE, for example, such values are 200-250 °C and 130-135 °C, respectively.

Stretching during the melting phase is a way of obtaining this result. In the case of melt stretching, the obtained monofilaments will be drawn from the extruder head at such a velocity that in addition to a significant reduction of the original cross-sectional area also a certain degree of orientation of the individual polymer chains is effected. The granular plastic is HDPE.

The degree of post-stretching, i.e. the ratio between the cross-sectional area of the plastic mass exiting the extruder head prior to and after the stretching operation, is at least 2, in particular that the degree of post-stretching is maximally 20.

This orientation is significantly smaller than in the case of cold stretching, but as the phenomenon occurs during the melting phase, there is a greater chance of the mechanical tensions being released before the monofilament solidifies. Thus the result is a monofilament whose classical mechanical properties, such as the elasticity modulus, may be less favourable than those of cold-stretched monofilaments, but which - because the amount of mechanical tensions therein is lower and because the polymer crystallises after orientation - also has a lower potential for weakening caused by heat and being played on repeatedly. Because of the different degree of orientation that occurs in the case of melt stretching, the fibrillation tendency will be lower than in the case of cold-stretched filaments: after all, the intermolecular forces and the intertwinement will be greater because of the crystallisation following orientation. Preferably, the extrusion process is carried out in such a manner that the monofilaments are given a trilobal shape.

The present invention further relates to an artificial lawn built up from monofilaments obtained by using the present method.

The degree of shrinkage is preferably less than 1.0 %, measured at 100 °C, the pushover energy is at least 50 micro Joules and the bending modulus (MPa) is at least 700.

The possible lack of stiffness can be readily offset by means of a relatively small increase of the cross-sectional area. It is also possible to use a more resilient geometry of the cross-section to offset the lower modulus of the obtained filament.

The present invention will now be explained in more detail by means of a number of examples, in which connection it should be noted, however, that the present invention is by no means limited to such special examples.
Figure 1 is a force-elongation diagram of a situation in which no stretching took place.
Figure 2 is a force-elongation diagram of a situation in which the degree of post-stretching in the melting phase was set at a value of 2.1.
Figure 3 is a force-elongation diagram of the situation in which the degree of post-stretching in the melting phase was set at a value of 5.1.

### Example.

HDPE from Basell (Hostalen GF 7740 F3 having a MFR of 0.5 g/10 min at 190 □C at a load of 2.16 kg, according to ISO 1133) was extruded at an extruder head temperature of 250-260 □C and a spacing between the extruder head and the stretching rollers of about 7.5 cm.

The data below relating to extruded wide bands of the sample material HDPE illustrate the previously discussed advantages of melt stretching.

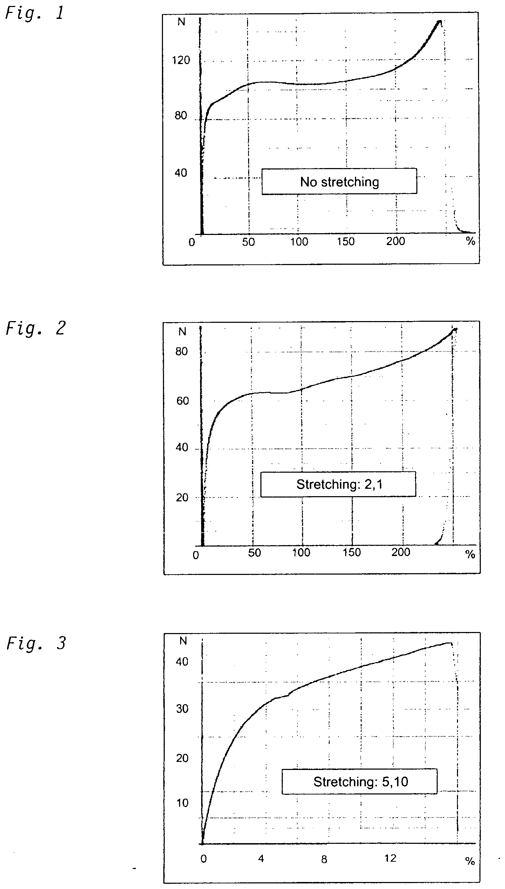

The trend of the elongation curve (see figures 1-3) will change as the extent of stretching in the melting phase increases. The original constriction in the case of no stretching or moderate stretching will clearly decrease and even disappear when sufficient melt stretching takes place. Constriction (the maximum in the curves) is a phenomenon which can be clearly related to poor resilience. When constriction is avoided (in the case of sufficient melt stretching), no deformation will take place in the irreversible region of the constriction when bending of the monofilaments (upon being played on) takes place. In other words, the material - the monofilament - will spring back elastically to its original position.

The following table is a survey of the properties as a function of the melt stretching process:

| Stretching | E (MPa) | E_{f} (MPa) | RBB (%) | Fibrillation | Pushover-W | Shrinkage |
|---|---|---|---|---|---|---|
| 1 | 700 | 300 | 300 | N-B | 90 µJ | 1.7% |
| 2,1 | 750 | 270 | 270 | B | 110 µJ | 0.1% |
| 5,1 | 1350 | 18 | 18 | M | 240 µJ | 0.1% |

| | | | | | | |
|---|---|---|---|---|---|---|
| wherein: Stretching: the degree of melt stretching (ratio beween cross-sectional areas before and after a melt stretching) E: the elongation modulus Ef: the bending modulus RBB: stretch upon fracture Fibrillation: categorised as follows N: no fibrillation, not even after initiation of cracking by notching B: no fibrillation without notching, very limited fibrillation after initiation of cracking by notching M: no fibrillation without notching, moderate fibrillation after initiation of cracking by notching | | | | | | |

Pushover-W: the energy required for completely pushing over an isolated monofilament having a thickness of 0.2 mm and a width of 1 mm (pile height 17.5 mm)

Shrinkage: the change in length in terms of percentage after 2 hours of exposure to 100 °C, in other words, the thermal resistance; hardly any significant shrinkage occurred below 100 °C.

These results clearly indicate that a sufficient degree of melt stretching (stretching between 2 and 5) for the tested HDPE has the following advantages:
- distinct modulus increase,
- disappearance of the constriction area (see curves) and thus an improved resilience,
- reduced fibrillation, on condition that no extreme stretching (even at stretching values of 4 to 5 the extent of fibrillation was very limited),
- an increased energy absorption as a result of the increased modulus - so that the ball will roll less, and
- reduced shrinkage and thus a distinctly improved thermal resistance.

## Claims

1. A method for forming monofilaments, wherein a granular plastic material is fed to an extruder, whereupon the extruder screw pressurises the grains and presses them through the extruder head, after which the material thus obtained is subjected to a post-stretching operation, **characterised in that** said granular plastic material is HDPE, wherein said post-stretching operation is carried out during the melting phase of the plastic material for crystallising said HDPE after orientation, wherein the degree of post-stretching, i.e. the ratio between the cross-sectional area of the plastic mass exiting the extruder head prior to and after the stretching operation, is at least 2 and maximally 20, wherein the degree of shrinkage of said HDPE is less than 1.0 %, measured at 100 °C and the bending modulus (MPa) is at least 700, wherein the pushover energy is at least 50 micro Joules.

2. An artificial lawn built up from monofilaments obtained from the method according to claim 1.

## Patentansprüche

1. Ein Verfahren zur Herstellung von Monofilamenten, worin ein körniges Plastikmaterial einem Extruder zugeführt wird, woraufhin die Extruderschraube die Körner unter Druck setzt und diese durch den Extruderkopf presst, wonach das so erhaltene Material einem nachträglichen Verstreckungsverfahren unterzogen wird, **dadurch gekennzeichnet, dass** das körnige Plastikmaterial HDPE ist, worin das nachträgliche Verstreckungsverfahren während der Schmelzphase des Plastikmaterials zur Kristallisation des HDPE nach der Ausrichtung ausgeführt wird, worin der Grad der Nachverstreckung, i.e. das Verhältnis zwischen der Querschnittsfläche der aus dem Extruderkopf austretenden Plastikmasse vor und nach dem Verstreckungsverfahren, mindestens 2 und maximal 20 beträgt, worin der Grad der Schrumpfung des HDPE weniger als 1,0 %, gemessen bei 100°C, beträgt und das Biegemodul (MPa) mindestens 700 beträgt, worin die Pushover-Energie mindestens 50 Mikrojoule beträgt.

2. Ein künstlicher Rasen aus Monofilamenten, erhalten durch das Verfahren gemäß Anspruch 1.

## Revendications

1. Procédé pour former des monofilaments, dans lequel une matière plastique granulaire est introduite dans une extrudeuse, après quoi la vis d'extrudeuse met les grains sous pression et les presse à travers la tête d'extrudeuse, après quoi la matière ainsi obtenue est soumise à une opération de post-étirage, **caractérisé en ce que** ladite matière plastique granulaire est du polyéthylène haute densité HDPE, dans lequel ladite opération de post-étirage est réalisée pendant la phase de fusion de la matière plastique pour cristalliser ledit HDPE après l'orientation, dans lequel le degré de post-étirage, c'est-à-dire le rapport entre la surface en coupe transversale de la masse plastique sortant de la tête d'extrudeuse avant et après l'opération d'étirage, est d'au moins 2 et au maximum 20, dans lequel le degré de retrait dudit HDPE est inférieur à 1,0%, mesuré à 100°C et le module de flexion (MPa) est d'au moins 700, dans lequel l'énergie de poussée est d'au moins 50 micro Joules.

2. Pelouse artificielle constituée de monofilaments obtenus par le procédé selon la revendication 1.
